(19) **Europäisches Patentamt / European Patent Office / Office européen des brevets**

(11) **EP 4 438 367 B1**

(12) **EUROPEAN PATENT SPECIFICATION**

(45) Date of publication and mention
of the grant of the patent:
**21.01.2026 Bulletin 2026/04**

(21) Application number: **23759259.7**

(22) Date of filing: **23.02.2023**

(51) International Patent Classification (IPC):
**B60K 11/02** *(2006.01)* **H02K 9/00** *(2006.01)*
**H02K 9/19** *(2006.01)*

(52) Cooperative Patent Classification (CPC):
**B60K 11/06; B60K 11/02; B60W 20/40;**
B60K 2001/006; B60W 30/18063; B60W 2510/083;
B60W 2510/087; B60W 2510/1005; B60W 2520/04;
B60W 2520/10; Y02T 10/62

(86) International application number:
**PCT/CN2023/078005**

(87) International publication number:
**WO 2023/160637 (31.08.2023 Gazette 2023/35)**

(54) **DRIVE MOTOR STALLING COOLING METHOD AND APPARATUS FOR VEHICLE, AND VEHICLE**

VERFAHREN UND VORRICHTUNG ZUR KÜHLUNG DES MOTORANTRIEBSSTILLSTANDS FÜR FAHRZEUG UND FAHRZEUG

PROCÉDÉ ET APPAREIL DE REFROIDISSEMENT DE CALAGE DE MOTEUR D'ENTRAÎNEMENT POUR VÉHICULE, ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2022 CN 202210188260**

(43) Date of publication of application:
**02.10.2024 Bulletin 2024/40**

(73) Proprietor: **BYD Company Limited**
**Shenzhen, Guangdong 518118 (CN)**

(72) Inventors:
• **LIU, Rujie**
**Shenzhen, Guangdong 518118 (CN)**

• **WANG, Chunsheng**
**Shenzhen, Guangdong 518118 (CN)**
• **XU, Boliang**
**Shenzhen, Guangdong 518118 (CN)**
• **CHEN, Xinli**
**Shenzhen, Guangdong 518118 (CN)**

(74) Representative: **Dehns Germany Partnerschaft mbB**
**Theresienstraße 6-8**
**80333 München (DE)**

(56) References cited:
CN-A- 109 591 602   CN-A- 111 022 142
CN-A- 111 907 512   CN-A- 111 907 512
CN-A- 114 056 109   CN-U- 214 450 260
JP-A- 2014 000 848   US-A1- 2013 173 104

**Description**

## FIELD

The present invention relates to the field of vehicle heat dissipation, and specifically, to a method and device for cooling a locked rotor driving motor (also referred to as a stalled driving motor) of a vehicle and a vehicle.

## BACKGROUND

For a hybrid vehicle equipped with an electric oil pump, a cooling system is driven by the electric oil pump, and can cool a driving motor under full working conditions. However, for a hybrid vehicle without an electric oil pump, when the vehicle is in an electric vehicle mode, the cooling of the driving motor mainly depends on rotation of a wheel to drive a wheel end oil pump to perform a cooling operation. However, when the hybrid vehicle is in an electric vehicle mode, a locked rotor of the driving motor may lead to a low vehicle speed, and then the wheel end oil pump has a low rotational speed to make it impossible to provide a sufficient coolant to cool the driving motor. As a result, the service life of the driving motor is reduced or the driving motor is even burnt out. CN 111 022 142 A discloses an oil cooling device for a hybrid power assembly having an internal combustion engine and a motor, the internal combustion engine being internally provided with an engine oil duct and an oil chamber for storing engine oil, a motor cooling jacket being integrated on the internal combustion engine, the motor being cooled by the motor cooling jacket, and the engine oil duct being connected with the motor cooling jacket for heat exchange. US 2013/173104 A1 discloses a vehicle control system for a vehicle that employs an electric oil pump to cool a rotating electrical machine even when the carrier frequency is changed. CN 111 907 512 A discloses a cold start control method for a hybrid vehicle.

## SUMMARY

An objective of the present invention is to provide a method and device for cooling a locked rotor driving motor (or a stalling driving motor) of a vehicle and a vehicle, to solve the technical problem that when a locked rotor occurs to a driving motor in an electric vehicle mode, it is impossible to provide a sufficient coolant to cool the driving motor. The present invention is set forth in the appended independent claims.

In order to achieve the above objective, a first aspect of the present invention provides a method for cooling a locked rotor driving motor of a vehicle. The vehicle includes a driving motor, an engine, an engine end oil pump, and a cooling flow path. The engine is configured to drive the engine end oil pump to run (or operate), and the cooling flow path connects the engine end oil pump to the driving motor. The method includes the following:

If a driving mode of the vehicle is an electric vehicle mode, the vehicle meets a preset locked rotor motor (or stalling motor) activation condition, and a current temperature of the driving motor is greater than an auxiliary cooling starting temperature of the engine, the engine of the vehicle is controlled to start, to cause the engine end oil pump of the vehicle to drive a coolant in the cooling flow path to cool the driving motor.

Optionally, the method further includes the following:

First duration for a temperature of the driving motor to reach a first preset temperature is determined according to a temperature change rate of the driving motor and the current temperature of the driving motor; and

if the first duration is less than or equal to first preset duration, the auxiliary cooling starting temperature of the engine is reduced.

Optionally, that if the first duration is less than or equal to first preset duration, the auxiliary cooling starting temperature of the engine is reduced includes the following:

If the first duration is less than or equal to the first preset duration, a target correction offset is determined based on the temperature change rate of the driving motor and a preset relationship between the temperature change rate and a correction offset; and

a difference between the first preset temperature and the target correction offset is taken as the auxiliary cooling starting temperature of the engine.

Optionally, that if the first duration is less than or equal to first preset duration, the auxiliary cooling starting temperature of the engine is reduced includes the following:

If the first duration is less than or equal to first preset duration, the auxiliary cooling starting temperature of the engine is equal to a second preset temperature, where the second preset temperature is less than the first preset temperature.

Optionally, the method further includes the following:

If the first duration is greater than the first preset duration, the auxiliary cooling starting temperature of the engine is equal to the first preset temperature.

Optionally, the method further includes the following:

If the vehicle meets a preset locked rotor motor exit condition and it is determined that the current temperature of the driving motor is less than an auxiliary cooling shutdown temperature of the engine, the engine is controlled to stop running after second preset duration.

Optionally, the first preset temperature is a maximum allowable temperature of the driving motor, the second preset temperature is a safe starting temperature of the driving motor under a locked rotor working condition, and the auxiliary cooling starting temperature of the engine is less than or equal to the first preset temperature.

Optionally, the method further includes the following:

A rotational speed of the engine is controlled based on the current temperature of the driving motor, where the rotational speed of the engine is positively correlated with the current temperature of the driving motor; and

if the vehicle meets the preset locked rotor motor activation condition and a flow rate of flowing through the cooling flow path of the driving motor is greater than a first preset cooling flow rate, a cooling fan of the vehicle is controlled to run at a maximum rotational speed to cool the driving motor.

Optionally, the method further includes the following:

If the vehicle meets a preset locked rotor motor exit condition and a flow rate of flowing through the cooling flow path of the driving motor is less than a second preset cooling flow rate, the cooling fan is controlled to stop running, where the first preset cooling flow rate is greater than the second preset cooling flow rate.

Optionally, that the engine of the vehicle is controlled to start includes the following:

The engine is controlled to output a preset rotational speed; and

a cooling fan of the vehicle is controlled to run at a maximum rotational speed to cool the driving motor.

Optionally, the method further includes the following:

It is determined that the vehicle meets a preset locked rotor motor exit condition and it is determined that the current temperature of the driving motor is less than an auxiliary cooling shutdown temperature of the engine; and

the cooling fan is controlled to stop running, and the engine is controlled to stop running after second preset duration; or the engine and the cooling fan are controlled to stop running after the second preset duration.

Optionally, the preset locked rotor motor activation condition includes: a gear of the vehicle is in a forward gear or a reverse gear, a torque of the driving motor is greater than or equal to a first preset torque, and a vehicle speed of the vehicle is less than or equal to a first preset vehicle speed; and

the preset locked rotor motor exit condition includes one or more of the following: the gear of the vehicle is neither in the forward gear nor in the reverse gear, the torque of the driving motor is less than a second preset torque, and the vehicle speed of the vehicle is greater than or equal to a second preset vehicle speed, where the first preset torque is greater than the second preset torque, and the first preset vehicle speed is less than the second preset vehicle speed.

Optionally, the vehicle includes a spill valve, and the spill valve is configured to control a flow rate in the cooling flow path. The method further includes the following:

After the engine is started to cool the driving motor, if the flow rate of flowing through the cooling flow path of the driving motor is greater than a third preset cooling flow rate, the spill valve of the vehicle is requested to enter a forcibly closed state.

A second aspect of the present invention further provides a device for cooling a locked rotor (or a stalled or stalling) driving motor of a vehicle. The vehicle includes a driving motor, an engine, an engine end oil pump, and a cooling flow path. The engine is configured to drive the engine end oil pump to run (or operate), and the cooling flow path connects the engine end oil pump to the driving motor. The device includes:

a controller, configured to implement the steps of the method for cooling a locked rotor driving motor of a vehicle according to any one of the implementations of the first aspect described above.

A third aspect of the present invention further provides a non-transitory computer-readable storage medium, having a computer program stored thereon. The program, when executed by a processor, implements the steps of the method for cooling a locked rotor driving motor of a vehicle according to any one of the implementations of the first aspect described above.

A fourth aspect of the present invention further provides a vehicle, including a driving motor, an engine, an engine end oil pump, a cooling flow path, and a controller.

The engine is configured to drive the engine end oil pump to run (or operate).

The cooling flow path connects the engine end oil pump to the driving motor.

The controller is configured to implement the steps of the method for cooling a locked rotor driving motor of a vehicle according to any one of the implementations of the first aspect described above.

Through the above technical solutions, at least the following technical effects can be achieved:

If a driving mode of the vehicle is an electric vehicle mode, the vehicle meets a preset locked rotor motor activation condition (or preset stalling motor activation condition), and a current temperature of the driving motor is greater than an auxiliary cooling starting temperature of the engine, the engine of the vehicle is controlled to start, to cause the engine end oil pump of the vehicle to drive a coolant in the cooling flow path to cool the driving motor. By this method, when the vehicle is in the electric vehicle mode and a locked rotor (or a stalling) occurs to the driving motor, the engine of the vehicle can be started to cool the driving motor, thereby solving the problem that the locked rotor of the driving motor leads to a low rotational speed of the wheel end oil pump to make it impossible to provide a sufficient coolant to cool the driving motor. As a result, the service life of the driving motor is reduced or the driving motor is even burnt out.

Other features and advantages of the present invention are described in detail in the subsequent specific implementations.

## BRIEF DESCRIPTION OF THE DRAWINGS

Accompanying drawings are intended to provide a further understanding of the present invention, and constitute a part of the specification. The accompanying drawings, together with the following specific implementations, are intended to explain the present invention, but do not constitute a limitation on the present invention. In the drawings:

FIG. 1 is a schematic diagram of a cooling system architecture;
FIG. 2 is a schematic flowchart of a method for cooling a locked rotor driving motor of a vehicle according to an embodiment of the present invention;
FIG. 3 is a schematic flowchart of another method for cooling a locked rotor driving motor of a vehicle according to an embodiment of the present invention;
FIG. 4 is a block diagram of a device for cooling a locked rotor driving motor of a vehicle according to an embodiment of the present invention;
FIG. 5 is a block diagram of a wheel according to an embodiment of the present invention; and
FIG. 6 is a block diagram of another wheel according to an embodiment of the present invention.

## DETAILED DESCRIPTION

Specific implementations of the present invention are described in detail below with reference to the accompanying drawings. It should be understood that the specific implementations described herein are merely intended to illustrate and explain the present invention, and are not intended to limit the present invention.

It should be understood that the steps described in the method implementations of the present invention may be performed in different orders and/or in parallel. In addition, the method implementation may include additional steps and/or omit the steps shown. The scope of the present invention is not limited in this respect. The term "include" and variants thereof used herein are open-ended including, that is, "including but not limited to". The term "based on" is "at least partially based on". The term "an embodiment" means "at least one embodiment". The term "another embodiment" means "at least one other embodiment". The term "some embodiments" means "at least some embodiments". Related definitions of other terms will be given in the following description.

It should be noted that the concepts of "first", "second", and the like mentioned in the present invention are only intended to distinguish different devices, modules, or units, and are not intended to limit the order or interdependence of the functions performed by these devices, modules, or units. It should be noted that the modifications of "a" and "multiple" mentioned in the present invention are schematic rather than limiting, and those skilled in the art should understand that unless the context clearly indicates otherwise, they should be understood as "one or more".

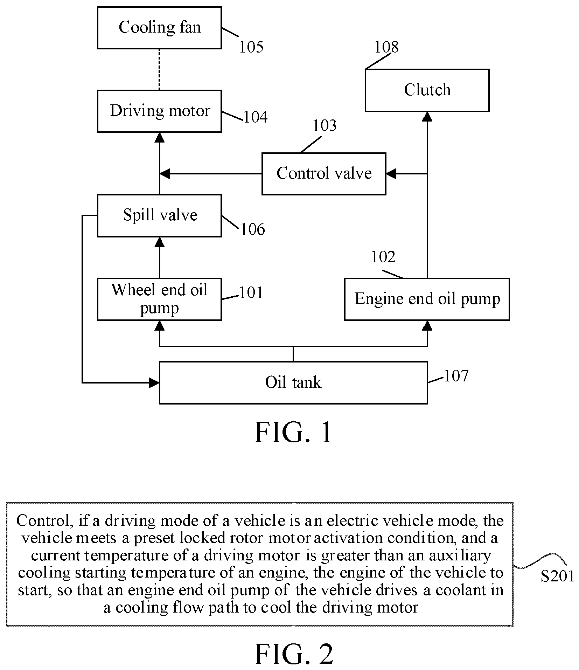

Currently, a cooling system architecture of a hybrid vehicle without an electric oil pump is shown in FIG. 1. A wheel end oil pump 101 and an engine end oil pump 102 are mechanical pumps. The wheel end oil pump 101 is driven by rotation of a wheel and is responsible for a low-pressure oil circuit (cooling and lubrication), while the engine end oil pump 102 is driven by rotation of an engine and is responsible for oil supply of a high-pressure oil circuit (hydraulic pressure of a clutch 108, and the like). In addition, a control valve 103 is arranged between the low-pressure oil circuit and the high-pressure oil circuit, and the control valve 103 includes at least a first state in which the engine end oil pump 102 is allowed to supply oil to a cooling oil circuit of a driving motor 104 and a second state in which the oil supply is off. When the hybrid vehicle is in an electric vehicle mode, the wheel end oil pump 101 is driven to perform a cooling operation mainly by the rotation of a wheel. When the hybrid vehicle is in a hybrid mode, the engine end oil pump 102 is driven by the engine to perform a cooling operation with the wheel end oil pump 101. In addition, a cooling fan 105 can also cool the driving motor 104 when operating. A spill valve 106 is an electromagnetic valve that controls a cooling flow rate of the cooling oil circle. When the driving motor 104 does not need cooling, the spill valve 106 is opened, allowing only cooling oil (that is, coolant) with a minimum flow rate to flow to the driving motor 104, and the excess part flows back to an oil tank 107. The driving motor 104 is shut down when needing to be cooled, and all the cooling oil exchanges heat with the outside through the cooling oil circuit.

However, when the hybrid vehicle is in an electric vehicle mode, a locked rotor of the driving motor may lead to a low vehicle speed, and then the wheel end oil pump has a low rotational speed to make it impossible to provide a sufficient coolant to cool the driving motor. As a result, the service life of the driving motor is reduced or the driving motor is even burnt out.

In view of this, for a hybrid vehicle without an electric oil pump, the present invention provides a method and device for cooling a locked rotor driving motor of a vehicle and a vehicle, to solve the above problems.

The technical solution of the present invention is described in detail below with reference to embodiments.

An embodiment of the present invention provides a method for cooling a locked rotor driving motor of a vehicle. The vehicle includes a driving motor, an engine, an engine end oil pump, and a cooling flow path. The engine is configured to drive the engine end oil pump to run, and the cooling flow path connects the engine end oil pump to the driving motor. As shown in FIG. 2, the method includes the following steps.

S201: If a driving mode of the vehicle is an electric vehicle mode, the vehicle meets a preset locked rotor motor activation condition, and a current temperature of the driving motor is greater than an auxiliary cooling starting temperature of the engine, the engine of the vehicle is controlled to start, to cause the engine end oil pump of the vehicle to drive a coolant in the cooling flow path to cool the driving motor.

By means of the above method, if a driving mode of the vehicle is an electric vehicle mode, the vehicle meets a preset locked rotor motor activation condition, and a current temperature of the driving motor is greater than an auxiliary cooling starting temperature of the engine, the engine of the vehicle is controlled to start, to cause the engine end oil pump of the vehicle to drive a coolant in the cooling flow path to cool the driving motor. By this method, when the vehicle is in the electric vehicle mode and a locked rotor occurs to the driving motor, the engine of the vehicle can be started to cool the driving motor, thereby solving the problem that the locked rotor of the driving motor leads to a low rotational speed of the wheel end oil pump to make it impossible to provide a sufficient coolant to cool the driving motor. As a result, the service life of the driving motor is reduced or the driving motor is even burnt out.

To make those skilled in the art better understand the method for cooling a locked rotor driving motor of a vehicle according to the present invention, the above steps are illustrated in detail below.

In a possible implementation, the method further includes the following: First duration for a temperature of the driving motor to reach a first preset temperature is determined according to a temperature change rate of the driving motor and the current temperature of the driving motor; and if the first duration is less than or equal to first preset duration, the auxiliary cooling starting temperature of the engine is reduced.

For example, if the first duration is less than or equal to the first preset duration, the auxiliary cooling starting temperature of the engine being reduced may be as follows: If the first duration is less than or equal to the first preset duration, a target correction offset is determined based on the temperature change rate of the driving motor and a preset relationship between the temperature change rate and a correction offset, and then a difference between the first preset temperature and the target correction offset is taken as the auxiliary cooling starting temperature of the engine.

Alternatively, if the first duration is less than or equal to first preset duration, the auxiliary cooling starting temperature of the engine being reduced may be as follows: If the first duration is less than or equal to first preset duration, the auxiliary cooling starting temperature of the engine is equal to a second preset temperature, where the second preset temperature is less than the first preset temperature.

The first preset temperature is a maximum allowable temperature of the driving motor, the second preset temperature is a safe starting temperature of the driving motor under a locked rotor working condition, and the auxiliary cooling starting temperature of the engine is less than or equal to the first preset temperature.

It should be understood that under normal circumstances, the auxiliary cooling starting temperature of the engine is usually set to a maximum allowable temperature of the driving motor. However, due to a response delay of a temperature sensor for a certain time, when the temperature sensor detects that the current temperature of the driving motor is greater than the maximum allowable temperature, an actual temperature of the driving motor may have been already much greater than the maximum allowable temperature, leading to overheating and burning of the driving motor. Therefore, the auxiliary cooling starting temperature of the engine can be adjusted according to the current temperature change rate and the maximum allowable temperature of the driving motor. For example, the auxiliary cooling starting temperature of the engine can be reduced, so that the engine can be started in advance to participate in the cooling of the driving motor, thereby ensuring that the driving motor always operates in a reasonable temperature range and avoiding overheating and burning of the driving motor caused by the response delay of the temperature sensor.

For example, the preset relationship between the temperature change rate and the correction offset is determined by experiments, which may be shown in Table 1 below. The temperature change rate is a temperature change rate of the driving motor every 3 seconds, and is obtained by rounding.

Table 1

| Temperature change rate (°C/3 s) | 0 | 1 | 2 | 3 |
|---|---|---|---|---|
| Correction offset A (°C) | 0 | 10 | 20 | 30 |

The auxiliary cooling starting temperature of the engine may be determined by the following calculation formula:

$$T = T_0 - A,$$

where T denotes the auxiliary cooling starting temperature of the engine, $T_0$ denotes the maximum allowable temperature of the driving motor, and A denotes the correction offset. The correction offset can be obtained by querying the current temperature change rate detected by the temperature sensor in Table 1.

Alternatively, based on the safe starting temperature of the driving motor under a locked rotor working condition, when the first duration is less than or equal to the first preset duration, the auxiliary cooling starting temperature of the engine is set to the safe starting temperature (second preset temperature), so that the engine can be started in advance to participate in the cooling of the driving motor, thereby ensuring that the driving motor always operates in a reasonable temperature range and avoiding overheating and burning of the driving motor caused by the response delay of the temperature sensor. Optionally, a relationship curve of the current temperature change rate and the auxiliary cooling starting temperature of the engine may be determined by experiments. In the relationship curve, when the current temperature change rate is 0, the auxiliary cooling starting temperature of the engine is equal to the maximum allowable temperature of the driving motor, and a larger current temperature change rate indicates a smaller auxiliary cooling starting temperature of the engine. The auxiliary cooling starting temperature of the engine is reduced based on the relationship curve, and the engine can be started in advance to cool the driving motor, to ensure that the driving motor always operates in a reasonable temperature range and avoid overheating and burning of the driving motor caused by the response delay of the temperature sensor.

In a possible implementation, the method further includes the following: If the first duration is greater than the first preset duration, the auxiliary cooling starting temperature of the engine is equal to the first preset temperature.

That is, when the duration for the temperature of the driving motor to reach the maximum allowable temperature is greater than the first preset duration, the driving motor is currently subjected to no risk of overheating and burning. Therefore, it is not necessary to start the engine in advance to participate in the cooling of the driving motor, and the auxiliary cooling starting temperature of the engine may be set to be consistent with the maximum allowable temperature. When the duration for the temperature of the driving motor to reach the maximum allowable temperature is less than or equal to the first preset duration, the driving motor is currently subjected to the risk of overheating and burning. Therefore, it is necessary to start the engine in advance to participate in the cooling of the driving motor, and the auxiliary cooling starting temperature of the engine is reduced to ensure that the driving motor always operates in a reasonable temperature range, and avoid overheating and burning of the driving motor caused by the response delay of the temperature sensor. The safe starting temperature may be 80°C and the maximum allowable temperature may be 110°C, which is specifically determined according to physical characteristics of the driving motor, and is not specifically limited in the present invention. In a possible implementation, the method further includes the following: If the vehicle meets a preset locked rotor motor exit condition and it is determined that the current temperature of the driving motor is less than an auxiliary cooling shutdown temperature of the engine, the engine is controlled to stop running after second preset duration.

For example, when the vehicle meets the preset locked rotor motor activation condition, the vehicle meets a preset cooling exit condition, and the current temperature of the driving motor is greater than the auxiliary cooling starting temperature of the engine, the engine is immediately started to participate in the cooling of the driving motor to avoid overheating and burning of the driving motor. Then, when the vehicle meets the preset cooling exit condition and it is determined that the current temperature of the driving motor is less than the auxiliary cooling shutdown temperature of the engine, that is, when the driving motor no longer needs the engine to participate in cooling, to avoid the loss caused by frequent starting of the engine to the engine, the engine can be shut down after preset duration, so as to prevent a change in vehicle state in a short time, which otherwise results in restarting the engine to cool the driving motor. The auxiliary cooling shutdown temperature of the engine is determined according to the physical characteristics of the driving motor, and for example, may be 105°C, and the preset duration may be set according to experiments, and for example, may be 14 s, which is not limited in the present invention.

In a possible implementation, the method further includes the following: A rotational speed of the engine is controlled based on the current temperature of the driving motor. The rotational speed of the engine is positively correlated with the current temperature of the driving motor. If the vehicle meets the preset locked rotor motor activation condition and a flow rate of flowing through the cooling flow path of the driving motor is greater than a first preset cooling flow rate, a cooling fan of the vehicle is controlled to run at a maximum rotational speed to cool the driving motor.

Further, the method further includes the following: If the vehicle meets a preset locked rotor motor exit condition and a flow rate of flowing through the cooling flow path of the driving motor is less than a second preset cooling flow rate, the cooling fan is controlled to stop running. The first preset cooling flow rate is greater than the second preset cooling flow rate.

It should be noted that the cooling of the driving motor mainly depends on that the coolant circulates in the cooling flow path, thereby taking away heat generated by the driving motor during the operation, and exchanging heat with the outside through a heat dissipation system.

For example, the rotational speed of the engine is positively correlated with the current temperature of the driving motor, that is, when the current temperature of the driving motor is higher, faster heat dissipation is needed, so the rotational speed of the engine controlled is higher, and a cooling flow rate driven by the engine end oil pump is larger, thereby taking away more heat. In addition, if the vehicle meets the preset locked rotor motor activation condition and a flow rate of flowing through the cooling flow path of the driving motor is greater than a first preset cooling flow rate, a cooling fan of the vehicle is controlled to run at a maximum rotational speed to ensure that the coolant dissipates heat as soon as possible, thereby cooling the driving motor.

However, if the vehicle meets the preset locked rotor motor exit condition and the flow rate of flowing through the cooling flow path of the driving motor is less than the second preset cooling flow rate, the cooling fan is controlled to stop running. Unnecessary energy consumption caused by the cooling fan always running at the maximum rotational speed is avoided.

The first preset cooling flow rate and the second preset cooling flow rate may be determined through experiments. For example, the first preset cooling flow rate may be 3 L, and the second preset cooling flow rate may be 1.5 L, which is not specifically limited in the present invention, provided that it is ensured that the first preset cooling flow rate is greater than the second preset cooling flow rate.

In a possible implementation, the engine start of the vehicle may be controlled by the following method: The engine is controlled to output a preset rotational speed, and the cooling fan of the vehicle is controlled to run at a maximum rotational speed to cool the driving motor.

Further, the method further includes the following: It is determined that the vehicle meets the preset locked rotor motor exit condition, it is determined that the current temperature of the driving motor is less than the auxiliary cooling shutdown temperature of the engine, then the cooling fan is controlled to stop running, and the engine is controlled to stop running after second preset duration. Alternatively, the engine and the cooling fan are controlled to stop running after second preset duration.

That is, if a driving mode of the vehicle is an electric vehicle mode, the vehicle meets the preset locked rotor motor activation condition, and the current temperature of the driving motor is greater than the auxiliary cooling starting temperature of the engine, the engine is controlled to run at a preset rotational speed to drive the engine end oil pump, and the cooling fan of the vehicle is controlled to run at the maximum rotational speed to cool the driving motor. The preset rotational speed is determined through experiments with both heat dissipation requirements and energy saving requirements taken into account, so as to better cool the driving motor.

Further, when the vehicle meets the preset locked rotor motor exit condition and the current temperature of the driving motor is less than the auxiliary cooling shutdown temperature of the engine, the cooling fan may be controlled to stop running, and the engine is controlled to stop running after the second preset duration. Alternatively, when the vehicle meets the preset locked rotor motor exit condition and the current temperature of the driving motor is less than the auxiliary cooling shutdown temperature of the engine, the engine and the cooling fan may be controlled to stop running after the second preset duration, to avoid unnecessary energy consumption. The second preset duration may be set as required, which is not limited in the present invention.

In a possible implementation, the vehicle includes a spill valve, and the spill valve is configured to control a flow rate in the cooling flow path. The method further includes the following: After the engine is started to cool the driving motor, if the flow rate of flowing through the cooling flow path of the driving motor is greater than a third preset cooling flow rate, the spill valve of the vehicle is requested to enter a forcibly closed state.

For example, after the engine is started to cool the driving motor, if the flow rate of flowing through the cooling flow path of the driving motor is greater than the third preset cooling flow rate, the spill valve of the vehicle is requested to enter a forcibly closed state, so that all the coolant passes through the cooling flow path of the vehicle to cool the driving motor, thereby improving the cooling effect on the driving motor. Then, if the vehicle meets the above preset locked rotor motor exit condition or the flow rate in the cooling flow path is less than the preset flow rate upon the opening of the spill valve, the spill valve is requested to exit the forcibly closed state, so as to reduce unnecessary power consumption.

It should be noted that closing the spill valve requires power-on control, which causes a resistor therein to heat up continuously. Therefore, if the spill valve is controlled to be closed when the engine is just started, that is, when the flow rate in the cooling flow path is low, the spill valve quickly heats up and is burned out. Therefore, in the embodiment of the present invention, after the engine is started to cool the driving motor, the spill valve of the vehicle is requested to enter the forcibly closed state, to prevent the spill valve from being burnt out. Therefore, after the engine is started to cool the driving motor, the spill valve of the vehicle may be controlled based on whether the flow rate of the cooling flow path meets preset requirements. For example, the spill valve may be controlled to be closed when the flow rate of the cooling flow path is greater than 1.5 L, and after the spill valve is closed, the spill valve may be controlled to be opened when the flow rate in the cooling flow path is less than 3 L, which may be specifically set as required, and is not limited in the present invention.

In a possible implementation, the preset locked rotor motor activation condition includes: a gear of the vehicle is in a forward gear or a reverse gear, a torque of the driving motor is greater than or equal to a first preset torque, and a vehicle speed of the vehicle is less than or equal to a first preset vehicle speed. The preset locked rotor motor exit condition includes one or more of the following: the gear of the vehicle is neither in the forward gear nor in the reverse gear, the torque of the driving motor is less than a second preset torque, and the vehicle speed of the vehicle is greater than or equal to a second preset vehicle speed. The first preset torque is greater than the second preset torque, and the first preset vehicle speed is less than the second preset vehicle speed.

For example, the first preset torque, the first preset vehicle speed, and the first preset temperature may be determined according to experiments and physical characteristics of the vehicle. For example, the first preset torque may be 150 N·m and the first preset vehicle speed may be 3 KM/h, which is not specifically limited in the present invention. The second preset torque, the second preset vehicle speed, and the second preset temperature are determined according to experiments and physical characteristics of the vehicle. For example, the second preset torque may be 10 N·m and the second preset vehicle speed may be 5 KM/h, which is not specifically limited in the present invention.

For example, when the vehicle is in the electric vehicle mode, and the vehicle meets requirements for a gear of the vehicle being in the forward gear or the reverse gear, the torque of the driving motor being greater than or equal to the first preset torque, the current vehicle speed of the vehicle being less than or equal to the first preset vehicle speed, and the current temperature of the driving motor being greater than the auxiliary cooling starting temperature of the engine, it can be determined that the driving motor of the vehicle is in a locked rotor state and needs to be cooled, and then the engine is started, so that the engine end oil pump of the vehicle drives the coolant in the cooling flow path to cool the driving motor. As a result, the service life of the driving motor is reduced or the driving motor is even burnt out. Then, when the vehicle meets the preset locked rotor motor exit condition, that is, when the driving motor no longer needs the engine to participate in cooling, to avoid the loss caused by frequent starting of the engine to the engine, the engine may be shut down after preset duration.

Further, when the current vehicle speed is greater than the first preset vehicle speed and less than the second preset vehicle speed, or when the torque of the driving motor is less than the first preset torque and greater than the second preset torque, the engine may be kept in the current operating state, so as to reduce the impact of vehicle speed fluctuation or torque fluctuation on the operating state of the engine and avoid the loss caused by frequent starting of the engine to the engine.

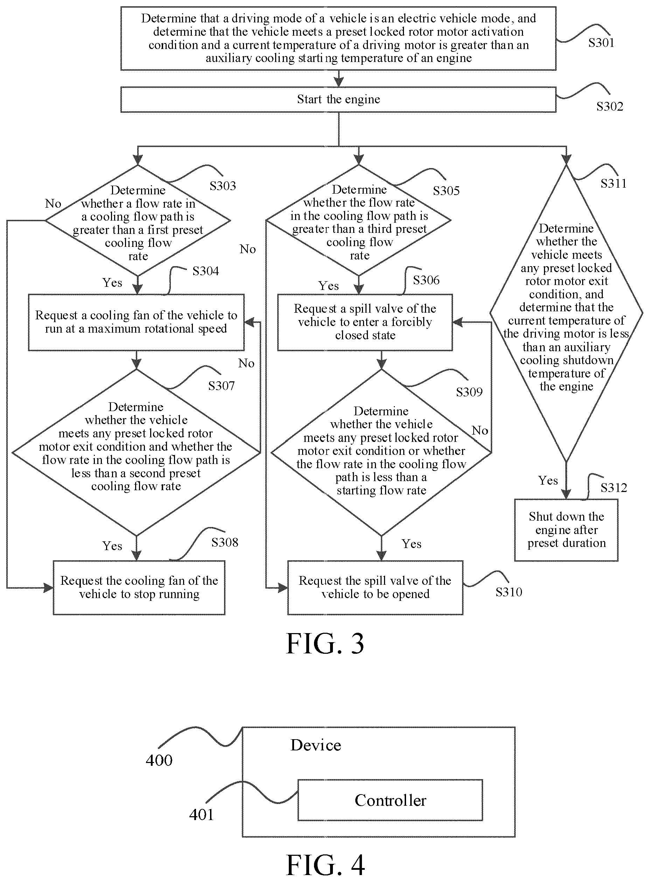

To make those skilled in the art understand the method according to the embodiment of the present invention more easily, the steps of the method for cooling a locked rotor driving motor of a vehicle are described in detail below. As shown in FIG. 3, the method includes the following steps.

S301: It is determined that a driving mode of the vehicle is an electric vehicle mode, and it is determined that the vehicle meets a preset locked rotor motor activation condition and a current temperature of the driving motor is greater than an auxiliary cooling starting temperature of an engine.

Step S302: The engine of the vehicle is started.

S303: It is determined whether a flow rate in a cooling flow path is greater than a first preset cooling flow rate.

Further, if the flow rate in the cooling flow path is greater than the first preset cooling flow rate, step S304 is performed, or else step S308 is performed.

S304: A cooling fan of the vehicle is requested to run at a maximum rotational speed.

S305: It is determined whether the flow rate in the cooling flow path is greater than a third preset cooling flow rate.

Further, if the flow rate in the cooling flow path is greater than the third preset cooling flow rate, step S306 is performed, or else step S310 is performed.

S306: A spill valve of the vehicle is requested to enter a forcibly closed state.

S307: It is determined whether the vehicle meets any preset locked rotor motor exit condition and whether the flow rate in the cooling flow path is less than a second preset cooling flow rate.

Further, if the vehicle meets any preset locked rotor motor exit condition and the flow rate in the cooling flow path is less than the second preset cooling flow rate, step S308 is performed, otherwise step S304 is performed.

S308: The cooling fan of the vehicle is requested to stop running.

S309: It is determined whether the vehicle meets any preset locked rotor motor exit condition or whether the flow rate in the cooling flow path is less than an opening flow rate.

Further, if the vehicle meets any preset locked rotor motor exit condition or the flow rate in the cooling flow path is less than the opening flow rate, step S310 is performed, otherwise step S306 is performed.

S310: The spill valve of the vehicle is requested to be opened.

S311: It is determined whether the vehicle meets any preset locked rotor motor exit condition and it is determined that the current temperature of the driving motor is less than an auxiliary cooling shutdown temperature of the engine.

Further, if the vehicle meets any preset locked rotor motor exit condition and it is determined that the current temperature of the driving motor is less than the auxiliary cooling shutdown temperature of the engine, step S312 is performed, or else the engine is kept in a started state.

S312: The engine is shut down after preset duration.

By the method, the engine of the vehicle can be started when the vehicle is in the electric vehicle mode and a locked rotor occurs to the driving motor, so that the engine end oil pump of the vehicle drives the coolant in the cooling flow path to cool the driving motor, so as to solve the problem that the locked rotor of the driving motor leads to a low rotational speed of the wheel end oil pump to make it impossible to provide a sufficient coolant to cool the driving motor. As a result, the service life of the driving motor is reduced or the driving motor is even burnt out. Furthermore, the heat exchange with the outside is accelerated by controlling the cooling fan and the spill valve, so as to improve the cooling effect on the driving motor.

Based on the same inventive concept, the present invention further provides a device for cooling a locked rotor driving motor of a vehicle. The vehicle includes a driving motor, an engine, an engine end oil pump, and a cooling flow path. The engine is configured to drive the engine end oil pump to run, and the cooling flow path connects the engine end oil pump to the driving motor. As shown in FIG. 4, the device 400 includes:
a controller 401, configured to implement the steps of the method for cooling a locked rotor driving motor of a vehicle described above.

Optionally, the controller 401 is configured to:
control, if a driving mode of the vehicle is an electric vehicle mode, the vehicle meets a preset locked rotor motor activation condition, and a current temperature of the driving motor is greater than an auxiliary cooling starting temperature of the engine, the engine of the vehicle to start, to cause the engine end oil pump of the vehicle to drive a coolant in the cooling flow path to cool the driving motor.

Optionally, the controller 401 is further configured to:

determine first duration for a temperature of the driving motor to reach a first preset temperature according to a temperature change rate of the driving motor and the current temperature of the driving motor; and
reduce the auxiliary cooling starting temperature of the engine if the first duration is less than or equal to first preset duration.

Optionally, the controller 401 is further configured to:

determine, if the first duration is less than or equal to the first preset duration, a target correction offset based on the temperature change rate of the driving motor and a preset relationship between the temperature change rate and a correction offset; and
take a difference between the first preset temperature and the target correction offset as the auxiliary cooling starting temperature of the engine.

Optionally, the controller 401 is further configured so that
if the first duration is less than or equal to first preset duration, the auxiliary cooling starting temperature of the engine is equal to a second preset temperature, where the second preset temperature is less than the first preset temperature.

Optionally, the controller 401 is further configured so that
if the first duration is greater than the first preset duration, the auxiliary cooling starting temperature of the engine is equal to the first preset temperature.

Optionally, the controller 401 is further configured to:
control, if the vehicle meets a preset locked rotor motor exit condition and it is determined that the current temperature of the driving motor is less than an auxiliary cooling shutdown temperature of the engine, the engine to stop running after second preset duration.

Optionally, the first preset temperature is a maximum allowable temperature of the driving motor, the second preset temperature is a safe starting temperature of the driving motor under a locked rotor working condition, and the auxiliary cooling starting temperature of the engine is less than or equal to the first preset temperature.

Optionally, the controller 401 is further configured to:

control a rotational speed of the engine based on the current temperature of the driving motor, where the rotational speed of the engine is positively correlated with the current temperature of the driving motor; and

control, if the vehicle meets the preset locked rotor motor activation condition and a flow rate of flowing through the cooling flow path of the driving motor is greater than a first preset cooling flow rate, a cooling fan of the vehicle to run at a maximum rotational speed to cool the driving motor.

Optionally, the controller 401 is further configured to:

control, if the vehicle meets a preset locked rotor motor exit condition and a flow rate of flowing through the cooling flow path of the driving motor is less than a second preset cooling flow rate, the cooling fan to stop running, where the first preset cooling flow rate is greater than the second preset cooling flow rate.

Optionally, the controller 401 is configured to:

control the engine is to output a preset rotational speed; and
control a cooling fan of the vehicle to run at a maximum rotational speed to cool the driving motor.

Optionally, the controller 401 is further configured to:

determine that the vehicle meets a preset locked rotor motor exit condition and determine that the current temperature of the driving motor is less than an auxiliary cooling shutdown temperature of the engine; and
control the cooling fan to stop running, and control the engine to stop running after second preset duration; or control the engine and the cooling fan to stop running after second preset duration.

Optionally, the preset locked rotor motor activation condition includes: a gear of the vehicle is in a forward gear or a reverse gear, a torque of the driving motor is greater than or equal to a first preset torque, and a vehicle speed of the vehicle is less than or equal to a first preset vehicle speed; and

the preset locked rotor motor exit condition includes one or more of the following: the gear of the vehicle is neither in the forward gear nor in the reverse gear, the torque of the driving motor is less than a second preset torque, and the vehicle speed of the vehicle is greater than or equal to a second preset vehicle speed, where the first preset torque is greater than the second preset torque, and the first preset vehicle speed is less than the second preset vehicle speed.

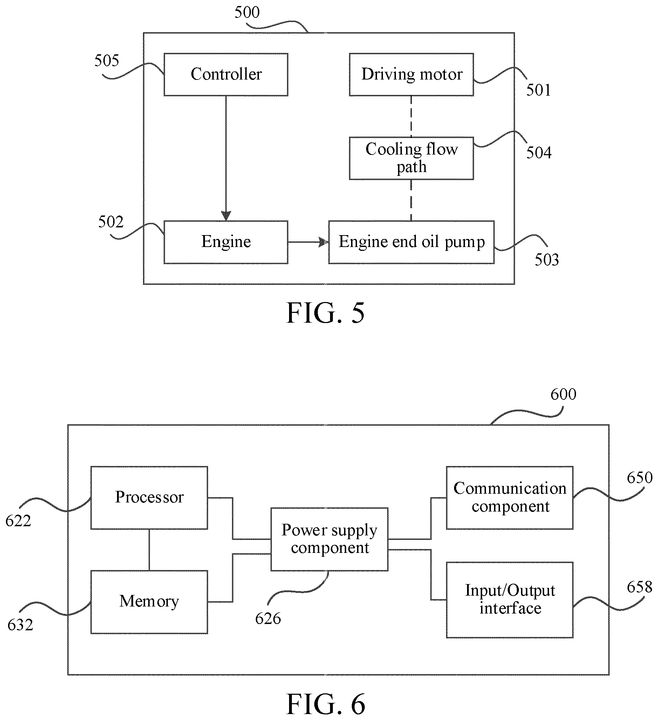

Optionally, the vehicle includes a spill valve, and the spill valve is configured to control a flow rate in the cooling flow path. The controller 401 is further configured to:
request, after the engine is started to cool the driving motor, if the flow rate of flowing through the cooling flow path of the driving motor is greater than a third preset cooling flow rate, the spill valve of the vehicle to enter a forcibly closed state.
By the above device, when the vehicle is in the electric vehicle mode and a locked rotor occurs to the driving motor, the engine of the vehicle can be started to cool the driving motor, thereby solving the problem that the locked rotor of the driving motor leads to a low rotational speed of the wheel end oil pump to make it impossible to provide a sufficient coolant to cool the driving motor. As a result, the service life of the driving motor is reduced or the driving motor is even burnt out.
With regard to the device in the above-mentioned embodiments, the specific way in which each module performs operations has been described in detail in the embodiments related to the method, and is not described in detail herein.
An embodiment of the present invention further provides a non-transitory computer-readable storage medium, having a computer program stored thereon. The program, when executed by a processor, implements the steps of the method for cooling a locked rotor driving motor of a vehicle according to the above embodiments.
An embodiment of the present invention further provides a vehicle 500, as shown in FIG. 5, including a driving motor 501, an engine 502, an engine end oil pump 503, a cooling flow path 504, and a controller 505.
The engine 502 is configured to drive the engine end oil pump 503 to run.
The cooling flow path 504 connects the engine end oil pump 503 to the driving motor 501.
The controller 505 is configured to implement the steps of the method for cooling a locked rotor driving motor of a vehicle according to the above embodiments.
An embodiment of the present invention further provides a vehicle, including:

a memory, having a computer program stored thereon; and
a processor, configured to execute the computer program in the memory to implement the steps of the method for cooling a driving motor according to the above embodiments.

FIG. 6 is a block diagram illustrating another vehicle 600 according to an example embodiment. Referring to FIG. 6, the vehicle 600 includes one or more processors 622, and a memory 632 configured to store a computer program executable by the processor 622. The computer program stored in the memory 632 may include one or more modules each corresponding to a set of instructions. In addition, the processor 622 may be configured to execute the computer program, to perform the method for cooling a driving motor described above.

In addition, the vehicle 600 may further include a power supply component 626 and a communication component 660. The power supply component 626 may be configured to perform power management of the vehicle 600. The communication component 660 may be configured to implement communication of the vehicle 600, such as wired or wireless communication. In addition, the vehicle 600 may further include an input/output (I/O) interface 668. The vehicle 600 may operate based on an operating system stored in the memory 632, such as Windows ServerTM, Mac OS XTM, UnixTM, and LinuxTM.

In another example embodiment, a computer-readable storage medium including program instructions is further provided. The program instructions, when executed by a processor, implement the steps of the method for cooling a driving motor described above. For example, the non-transitory computer-readable storage medium may be the above-mentioned memory 632 including program instructions, and the above-mentioned program instructions may be executed by the processor 622 of the vehicle 600 to complete the method for cooling a driving motor described above.

In another example embodiment, a computer program product is further provided. The computer program product includes a computer program executable by a programmable device. The computer program has a code portion for performing the method for cooling a locked rotor driving motor of a vehicle described above when executed by the programmable device.

The preferred implementations of the present invention have been described above in detail with reference to the accompanying drawings, but the present invention as defined in the appended claims is not limited to the specific details in the above-mentioned implementations.

In addition, it should be noted that the specific technical features described in the above-mentioned specific implementations can be combined in any suitable way without contradiction. To prevent unnecessary repetition, various possible combinations are no longer explained separately in the present disclosure.

In addition, various implementations of the present invention can also be arbitrarily combined, provided that they do not depart from the present invention as defined in the appended claims.

Reference numerals:

101    wheel end oil pump

102    engine end oil pump

103    control valve

104    driving motor

105    cooling fan

106    spill valve

107    oil tank

108    clutch

400    device

401    controller

500    vehicle

501    driving motor

502     engine

503     engine end oil pump

504     cooling flow path path

505     controller

600     vehicle

622     processor

626     power supply component

632     memory

660     communication component

**Claims**

1.  A method for cooling a locked rotor driving motor of a vehicle, the vehicle (500) comprising a driving motor (501), an engine (502), an engine end oil pump (503), and a cooling flow path (504), the engine (502) being configured to drive the engine end oil pump (503) to run, and the cooling flow path (504) connecting the engine end oil pump (503) to the driving motor (501), the method being **characterized by** comprising:
    controlling, if a driving mode of the vehicle (500) is an electric vehicle mode, the vehicle (500) meets a preset motor locked rotor activation condition, wherein the preset locked rotor motor activation condition comprises: a gear of the vehicle (500) is in a forward gear or a reverse gear, a torque of the driving motor (501) is greater than or equal to a first preset torque, and a vehicle speed of the vehicle (500) is less than or equal to a first preset vehicle speed; and if a current temperature of the driving motor is greater than an auxiliary cooling starting temperature of the engine, the engine (502) of the vehicle (500) to start, to cause the engine end oil pump (503) of the vehicle (500) to drive a coolant in the cooling flow path (504) to cool the driving motor (501).

2.  The method according to claim 1, further comprising:

    determining first duration for a temperature of the driving motor (501) to reach a first preset temperature according to a temperature change rate of the driving motor (501) and the current temperature of the driving motor (501); and reducing, if the first duration is less than or equal to first preset duration, the auxiliary cooling starting temperature of the engine.

3.  The method according to claim 2, wherein the reducing, if the first duration is less than or equal to first preset duration, the auxiliary cooling starting temperature of the engine comprises:

    determining, if the first duration is less than or equal to the first preset duration, a target correction offset based on the temperature change rate of the driving motor (501) and a preset relationship between the temperature change rate and a correction offset; and
    taking a difference between the first preset temperature and the target correction offset as the auxiliary cooling starting temperature of the engine.

4.  The method according to claim 2, wherein the reducing, if the first duration is less than or equal to first preset duration, the auxiliary cooling starting temperature of the engine comprises:
    allowing, if the first duration is less than or equal to first preset duration, the auxiliary cooling starting temperature of the engine to be equal to a second preset temperature, wherein the second preset temperature is less than the first preset temperature.

5.  The method according to any one of claims 2 to 4, further comprising:
    allowing, if the first duration is greater than the first preset duration, the auxiliary cooling starting temperature of the engine to be equal to the first preset temperature.

6. The method according to any one of claims 2 to 4, further comprising:
controlling, if the vehicle (500) meets a preset locked rotor motor exit condition and it is determined that the current temperature of the driving motor (501) is less than an auxiliary cooling shutdown temperature of the engine, the engine (502) to stop running after second preset duration.

7. The method according to any one of claims 2 to 4, wherein the first preset temperature is a maximum allowable temperature of the driving motor (501), the second preset temperature is a safe starting temperature of the driving motor (501) under a locked rotor working condition, and the auxiliary cooling starting temperature of the engine is less than or equal to the first preset temperature.

8. The method according to claim 1, further comprising:

controlling a rotational speed of the engine (502) based on the current temperature of the driving motor (501), wherein the rotational speed of the engine (502) is positively correlated with the current temperature of the driving motor (502); and
controlling, if the vehicle (500) meets the preset locked rotor motor activation condition and a flow rate of flowing through the cooling flow path (504) of the driving motor (501) is greater than a first preset cooling flow rate, a cooling fan of the vehicle (500) to run at a maximum rotational speed to cool the driving motor (501).

9. The method according to claim 8, further comprising:

controlling, if the vehicle (500) meets a preset locked rotor motor exit condition and the flow rate of flowing through the cooling flow path (504) of the driving motor (501) is less than a second preset cooling flow rate, the cooling fan to stop running,
wherein the first preset cooling flow rate is greater than the second preset cooling flow rate.

10. The method according to claim 1, wherein the controlling the engine (502) of the vehicle (500) to start comprises:

controlling the engine (502) to output a preset rotational speed; and
controlling a cooling fan of the vehicle (500) to run at a maximum rotational speed to cool the driving motor (501),

particularly further comprising:

determining that the vehicle (500) meets a preset locked rotor motor exit condition and determining that the current temperature of the driving motor (501) is less than an auxiliary cooling shutdown temperature of the engine; and
controlling the cooling fan to stop running, and controlling the engine (502) to stop running after second preset duration; or controlling the engine (502) and the cooling fan to stop running after second preset duration.

11. The method according to claim 6 or 9 or 10, second alternative, wherein the preset locked rotor motor exit condition comprises one or more of the following: the gear of the vehicle is neither in the forward gear nor in the reverse gear, the torque of the driving motor is less than a second preset torque, and the vehicle speed of the vehicle (500) is greater than or equal to a second preset vehicle speed,
wherein the first preset torque is greater than the second preset torque, and the first preset vehicle speed is less than the second preset vehicle speed.

12. The method according to claim 1, wherein the vehicle (500) comprises a spill valve, the spill valve is configured to control a flow rate in the cooling flow path (504), and the method further comprises:
requesting, after the engine (502) is started to cool the driving motor (501), if a flow rate of flowing through the cooling flow path (504) of the driving motor (501) is greater than a third preset cooling flow rate, the spill valve of the vehicle (500) to enter a forcibly closed state.

13. A non-transitory computer-readable storage medium, having a computer program stored thereon, wherein the program, when executed by a processor, implements the steps of the method for cooling a locked rotor driving motor of a vehicle according to any one of claims 1 to 12.

14. A vehicle (500), comprising a driving motor (501), an engine (502), an engine end oil pump (503), a cooling flow path (504), and a controller (505);

the engine (502) being configured to drive the engine end oil pump (503) to run;
the cooling flow path (504) connecting the engine end oil pump (503) to the driving motor (501); and
the controller (505) being configured to implement the steps of the method for cooling a locked rotor driving motor of a vehicle according to any one of claims 1 to 12.

**Patentansprüche**

1. Verfahren zum Kühlen eines Antriebsmotors bei blockiertem Rotor eines Fahrzeugs, wobei das Fahrzeug (500) einen Antriebsmotor (501), einen Motor (502), eine Motorendölpumpe (503) und einen Kühlströmungsweg bzw. -pfad (504) umfasst, wobei der Motor (502) dazu konfiguriert ist, dass er die Motorendölpumpe (503) antreibt, und der Kühlstrompfad (504) die Motorendölpumpe (503) mit dem Antriebsmotor (501) verbindet, wobei das Verfahren **dadurch gekennzeichnet ist, dass** es umfasst:
   wenn ein Fahrmodus des Fahrzeugs (500) ein Elektrofahrzeugmodus ist, das Fahrzeug (500) eine voreingestellte Motor-Rotorblockier-Aktivierungsbedingung erfüllt, wobei die voreingestellte Motor-Rotorblockier-Aktivierungsbedingung umfasst: ein Gang des Fahrzeugs (500) in einem Vorwärtsgang oder einem Rückwärtsgang ist, ein Drehmoment des Antriebsmotors (501) größer oder gleich einem ersten voreingestellten Drehmoment ist und eine Fahrzeuggeschwindigkeit des Fahrzeugs (500) kleiner oder gleich einer ersten voreingestellten Fahrzeuggeschwindigkeit ist; und wenn eine aktuelle Temperatur des Antriebsmotors größer als eine Hilfskühlungs-Starttemperatur des Motors ist, Steuern des Motors (502) des Fahrzeugs (500) zu starten, um zu bewirken, dass die Motorendölpumpe (503) des Fahrzeugs (500) ein Kühlmittel in dem Kühlstrompfad (504) antreibt, um den Antriebsmotor (501) zu kühlen.

2. Verfahren gemäß Anspruch 1, das ferner umfasst:

   Bestimmen einer ersten Dauer, in der eine Temperatur des Antriebsmotors (501) eine erste voreingestellte Temperatur gemäß einer Temperaturänderungsrate des Antriebsmotors (501) und der aktuellen Temperatur des Antriebsmotors (501) erreicht; und
   Reduzieren der Hilfskühlungsstarttemperatur des Motors, wenn die erste Dauer kleiner oder gleich einer ersten voreingestellten Dauer ist.

3. Verfahren gemäß Anspruch 2, wobei das Verringern der Starttemperatur der Hilfs- bzw. Zusatzkühlung des Motors, wenn die erste Dauer kleiner oder gleich einer ersten voreingestellten Dauer ist, umfasst:

   Bestimmen eines Zielkorrektur-Offsets auf der Grundlage der Temperaturänderungsrate des Antriebsmotors (501) und einer voreingestellten Beziehung zwischen der Temperaturänderungsrate und einem Korrektur-Offset, wenn die erste Dauer kleiner oder gleich der ersten voreingestellten Dauer ist; und
   Nehmen der Differenz zwischen der ersten voreingestellten Temperatur und dem Zielkorrektur-Offset als Hilfskühlungsstarttemperatur des Motors.

4. Verfahren gemäß Anspruch 2, wobei das Verringern, wenn die erste Dauer kleiner oder gleich der ersten voreingestellten Dauer ist, die Hilfskühlungsstarttemperatur des Motors umfasst:
   Erlauben, wenn die erste Dauer kleiner oder gleich der ersten voreingestellten Dauer ist, die Starttemperatur der Zusatzkühlung des Motors einer zweiten voreingestellten Temperatur anzugleichen, wobei die zweite voreingestellte Temperatur kleiner als die erste voreingestellte Temperatur ist.

5. Verfahren gemäß einem der Ansprüche 2 bis 4, das ferner umfasst:
   Erlauben, wenn die erste Dauer größer als die erste voreingestellte Dauer ist, die Starttemperatur der Zusatzkühlung des Motors gleich der ersten voreingestellten Temperatur sein zu lassen.

6. Verfahren gemäß einem der Ansprüche 2 bis 4, das ferner umfasst:
   Steuern, wenn das Fahrzeug (500) eine voreingestellte Bedingung für den Ausstieg aus dem Motor mit blockiertem Rotor erfüllt und festgestellt wird, dass die aktuelle Temperatur des Antriebsmotors (501) unter einer Abschalttemperatur für die Zusatzkühlung des Motors liegt, dass der Motor (502) nach einer zweiten voreingestellten Dauer den Betrieb einstellt.

7. Verfahren gemäß einem der Ansprüche 2 bis 4, wobei die erste voreingestellte Temperatur eine maximal zulässige Temperatur des Antriebsmotors (501) ist, die zweite voreingestellte Temperatur eine sichere Starttemperatur des Antriebsmotors (501) unter einer Blockierbedingung ist und die Hilfskühlungs-Starttemperatur des Motors kleiner oder gleich der ersten voreingestellten Temperatur ist.

8. Verfahren gemäß Anspruch 1, das ferner umfasst:

Steuern einer Drehzahl des Motors (502) auf der Grundlage der aktuellen Temperatur des Antriebsmotors (501), wobei die Drehzahl des Motors (502) positiv mit der aktuellen Temperatur des Antriebsmotors (502) korreliert ist; und
Steuern, wenn das Fahrzeug (500) die voreingestellte Aktivierungsbedingung für den Motor mit blockiertem Rotor erfüllt und eine Durchflussrate durch den Kühlstrompfad (504) des Antriebsmotors (501) größer als eine erste voreingestellte Kühlstromrate ist, eines Kühlgebläses des Fahrzeugs (500), um mit einer maximalen Drehzahl zu laufen, um den Antriebsmotor (501) zu kühlen.

9. Verfahren gemäß Anspruch 8, das ferner umfasst:

Steuern, wenn das Fahrzeug (500) eine voreingestellte Motorausstiegsbedingung bei blockiertem Rotor erfüllt und die Durchflussrate des Flusses durch den Kühlstrompfad (504) des Antriebsmotors (501) kleiner als eine zweite voreingestellte Kühlstromdurchflussrate ist, dass der Kühlventilator bzw. das Kühlgebläse den Betrieb einstellt,
wobei die erste voreingestellte Kühlstromdurchflussrate größer ist als die zweite voreingestellte Kühlstromdurchflussrate.

10. Verfahren gemäß Anspruch 1, wobei das Steuern des Motors (502) des Fahrzeugs (500) zum Starten umfasst:

Steuern des Motors (502), um eine voreingestellte Drehzahl auszugeben; und
Steuern eines Kühlgebläses des Fahrzeugs (500), um mit einer maximalen Drehzahl zu laufen, um den Antriebsmotor (501) zu kühlen,

insbesondere ferner umfassend:

Feststellen, dass das Fahrzeug (500) eine voreingestellte Motorausstiegsbedingung bei blockiertem Rotor erfüllt, und Feststellen, dass die aktuelle Temperatur des Antriebsmotors (501) unter einer Hilfskühlungs-Abschalttemperatur des Motors liegt; und
Steuern des Kühlgebläses, um den Betrieb zu stoppen, und Steuern des Motors (502), um den Betrieb nach einer zweiten voreingestellten Dauer zu stoppen; oder Steuern des Motors (502) und des Kühlgebläses, um den Betrieb nach einer zweiten voreingestellten Dauer zu stoppen.

11. Verfahren gemäß Anspruch 6 oder 9 oder 10, zweite Alternative, wobei die voreingestellte Motoraustrittsbedingung eines oder mehrere der folgenden Merkmale umfasst: Der Gang des Fahrzeugs ist weder in dem Vorwärtsgang noch in dem Rückwärtsgang, das Drehmoment des Antriebsmotors ist geringer als ein zweites voreingestelltes Drehmoment, und die Fahrzeuggeschwindigkeit des Fahrzeugs (500) ist größer oder gleich einer zweiten voreingestellten Fahrzeuggeschwindigkeit,
wobei das erste voreingestellte Drehmoment größer ist als das zweite voreingestellte Drehmoment und die erste voreingestellte Fahrzeuggeschwindigkeit kleiner ist als die zweite voreingestellte Fahrzeuggeschwindigkeit.

12. Verfahren gemäß Anspruch 1, wobei das Fahrzeug (500) ein Überströmventil umfasst, das Überströmventil ist dazu konfiguriert, eine Durchflussrate in dem Kühlströmungsweg (504) zu steuern, und das Verfahren ferner umfasst:
Anfordern, nachdem der Motor (502) gestartet wurde, um den Antriebsmotor (501) zu kühlen, wenn eine Durchflussrate, die durch den Kühlstrompfad (504) des Antriebsmotors (501) fließt, größer als eine dritte voreingestellte Kühlstromrate ist, dass das Überströmventil des Fahrzeugs (500) in einen zwangsweise geschlossenen Zustand übergeht.

13. Nichtflüchtiges, computerlesbares Speichermedium, auf dem ein Computerprogramm gespeichert ist, wobei das Programm, wenn es von einem Prozessor ausgeführt wird, die Schritte des Verfahrens zum Kühlen eines blockierten Rotorantriebsmotors eines Fahrzeugs gemäß einem der Ansprüche 1 bis 12 implementiert.

14. Fahrzeug (500), umfassend einen Antriebsmotor (501), einen Motor (502), eine Motorendölpumpe (503), einen Kühlstrompfad (504) und eine Steuerung (505);

wobei der Motor (502) dazu konfiguriert ist, dass er die Motorendölpumpe (503) zum Laufen antreibt;
wobei der Kühlstrompfad (504) die Motorendölpumpe (503) mit dem Antriebsmotor (501) verbindet; und
wobei die Steuereinheit (505) dazu konfiguriert ist, dass sie die Schritte des Verfahrens zum Kühlen eines blockierten Rotorantriebsmotors eines Fahrzeugs gemäß Anspruch 1 bis 12 ausführt.

**Revendications**

1. Procédé de refroidissement d'un moteur d'entraînement à rotor bloqué d'un véhicule, le véhicule (500) comprenant un moteur d'entraînement (501), un moteur (502), une pompe à huile côté moteur (503) et un circuit de refroidissement (504), le moteur (502) étant configuré pour entraîner la pompe à huile côté moteur (503) afin qu'elle fonctionne, et le circuit de refroidissement (504) reliant la pompe à huile côté moteur (503) au moteur d'entraînement (501), le procédé étant **caractérisé en ce qu'**il comprend :
la commande, si un mode de conduite du véhicule (500) est un mode véhicule électrique, le véhicule (500) répond à une condition d'activation du moteur à rotor bloqué prédéfinie, dans lequel la condition d'activation du moteur à rotor bloqué prédéfinie comprend : un rapport de vitesse du véhicule (500) est engagé en marche avant ou en marche arrière, un couple du moteur d'entraînement (501) est supérieur ou égal à un premier couple prédéfini, et une vitesse du véhicule (500) est inférieure ou égale à une première vitesse prédéfinie du véhicule ; et si une température actuelle du moteur d'entraînement est supérieure à une température de démarrage du refroidissement auxiliaire du moteur, du moteur (502) du véhicule (500) á démarrer, afin d'amener la pompe à huile d'extrémité du moteur (503) du véhicule (500) à entraîner un liquide de refroidissement dans le circuit de refroidissement (504) pour refroidir le moteur d'entraînement (501).

2. Procédé selon la revendication 1, comprenant en outre :

déterminer une première durée pendant laquelle la température du moteur d'entraînement (501) atteint une première température prédéfinie selon le taux de variation de température du moteur d'entraînement (501) et de la température actuelle du moteur d'entraînement (501) ; et
la réduction, si la première durée est inférieure ou égale à une première durée prédéfinie, de la température de démarrage du refroidissement auxiliaire du moteur.

3. Procédé selon la revendication 2, dans lequel la réduction, si la première durée est inférieure ou égale à une première durée prédéfinie, de la température de démarrage du refroidissement auxiliaire du moteur comprend :

défini, si la première durée est inférieure ou égale à la première durée prédéfinie, d'un décalage de correction cible basé sur le taux de variation de température du moteur d'entraînement (501) et une relation prédéfinie entre le taux de variation de température et un décalage de correction ; et
prendre la différence entre la première température prédéfinie et le décalage de correction cible comme température de démarrage du refroidissement auxiliaire du moteur.

4. Procédé selon la revendication 2, dans lequel la réduction, si la première durée est inférieure ou égale à la première durée prédéfinie, de la température de démarrage du refroidissement auxiliaire du moteur comprend :
permettre, si la première durée est inférieure ou égale à la première durée prédéfinie, que la température de démarrage du refroidissement auxiliaire du moteur soit égale à une deuxième température prédéfinie, dans laquelle la deuxième température prédéfinie est inférieure à la première température prédéfinie.

5. Procédé selon l'une quelconque des revendications 2 à 4, comprenant en outre :
permettre, si la première durée est supérieure à la première durée prédéfinie, que la température de démarrage du refroidissement auxiliaire du moteur soit égale à la première température prédéfinie.

6. Procédé selon l'une quelconque des revendications 2 à 4, comprenant en outre :
commander, si le véhicule (500) remplit une condition prédéfinie de sortie du moteur à rotor bloqué et s'il est déterminé que la température actuelle du moteur d'entraînement (501) est inférieure à une température d'arrêt du refroidissement auxiliaire du moteur, que le moteur (502) cesse de fonctionner après la durée prédéfinie de deuxième commande.

7. Procédé selon l'une quelconque des revendications 2 à 4, dans lequel la première température prédéfinie est une température maximale admissible du moteur d'entraînement (501), la deuxième température prédéfinie est une température de démarrage sûre du moteur d'entraînement (501) dans des conditions de fonctionnement à rotor bloqué, et la température de démarrage du refroidissement auxiliaire du moteur est inférieure ou égale à la première température prédéfinie.

8. Procédé selon la revendication 1, comprenant en outre :

la commande de la vitesse de rotation du moteur (502) en fonction de la température actuelle du moteur d'entraînement (501), dans lequel la vitesse de rotation du moteur (502) est positivement corrélée à la température actuelle du moteur d'entraînement (502) ; et

commander, si le véhicule (500) remplit la condition prédéfinie d'activation du moteur à rotor bloqué et si un débit s'écoulant à travers le chemin d'écoulement de refroidissement (504) du moteur d'entraînement (501) est supérieur à un premier débit de refroidissement prédéfini, d'un ventilateur de refroidissement du véhicule (500) pour qu'il fonctionne à une vitesse de rotation maximale afin de refroidir le moteur d'entraînement (501).

9. Procédé selon la revendication 8, comprenant en outre :

commander, si le véhicule (500) remplit une condition de sortie du moteur à rotor bloqué prédéfinie et si le débit d'e circulant dans le circuit de refroidissement (504) du moteur d'entraînement (501) est inférieur à un deuxième débit de refroidissement prédéfini, le ventilateur de refroidissement pour qu'il cesse de fonctionner,

dans lequel le premier débit de refroidissement prédéfini est supérieur au deuxième débit de refroidissement prédéfini.

10. Procédé selon la revendication 1, dans lequel le commandement du moteur (502) du véhicule (500) pour démarrer comprend :

commander le moteur (502) pour qu'il produise une vitesse de rotation prédéfinie ; et
commander un ventilateur de refroidissement du véhicule (500) pour qu'il fonctionne à une vitesse de rotation maximale afin de refroidir le moteur d'entraînement (501),

comprendre en particulier en outre :

déterminer que le véhicule (500) remplit une condition de sortie du moteur à rotor bloqué prédéfinie et déterminer que la température actuelle du moteur d'entraînement (501) est inférieure à une température d'arrêt de refroidissement auxiliaire du moteur ; et
commander le ventilateur de refroidissement pour qu'il cesse de fonctionner, et commander le moteur (502) pour qu'il cesse de fonctionner après une deuxième durée prédéfinie ; ou commander le moteur (502) et le ventilateur de refroidissement pour qu'ils cessent de fonctionner après une deuxième durée prédéfinie.

11. Procédé selon la revendication 6 ou 9 ou 10, deuxième alternative, dans lequel la condition prédéfinie de sortie du moteur à rotor bloqué comprend un ou plusieurs des éléments suivants :
le rapport du véhicule n'est ni en marche avant ni en marche arrière, le couple du moteur d'entraînement est inférieur à un deuxième couple prédéfini, et la vitesse du véhicule (500) est supérieure ou égale à une deuxième vitesse prédéfinie du véhicule,
dans lequel le premier couple prédéfini est supérieur au deuxième couple prédéfini, et la première vitesse prédéfinie du véhicule est inférieure à la deuxième vitesse prédéfinie du véhicule.

12. Procédé selon la revendication 1, dans lequel le véhicule (500) comprend une soupape de décharge, la soupape de décharge est configurée pour commander un débit dans le circuit de refroidissement (504), et le procédé comprend en outre :
requête, après le démarrage du moteur (502) pour refroidir le moteur d'entraînement (501), si un débit s'écoulant à travers le circuit de refroidissement (504) du moteur d'entraînement (501) est supérieur à un troisième débit de refroidissement prédéfini, à la soupape de décharge du véhicule (500) de passer à un état fermé de force.

13. Support de stockage non transitoire lisible par ordinateur, sur lequel est stocké un programme informatique, dans lequel le programme, lorsqu'il est exécuté par un processeur, implémenter les étapes du procédé de refroidissement d'un moteur d'entraînement à rotor bloqué d'un véhicule selon l'une quelconque des revendications 1 à 12.

14. Véhicule (500) comprenant un moteur d'entraînement (501), un moteur (502), une pompe à huile côté moteur (503), un circuit de refroidissement (504) et un contrôleur (505) ;

le moteur (502) étant configuré pour entraîner la pompe à huile côté moteur (503) afin qu'elle fonctionne ;
le circuit de refroidissement (504) reliant la pompe à huile côté moteur (503) au moteur d'entraînement (501) ; et
le contrôleur (505) étant configuré pour implémenter les étapes du procédé de refroidissement d'un moteur
d'entraînement à rotor bloqué d'un véhicule selon l'une quelconque des revendications 1 à 12.

FIG. 1

FIG. 2

Determine that a driving mode of a vehicle is an electric vehicle mode, and determine that the vehicle meets a preset locked rotor motor activation condition and a current temperature of a driving motor is greater than an auxiliary cooling starting temperature of an engine — S301

Start the engine — S302

Determine whether a flow rate in a cooling flow path is greater than a first preset cooling flow rate — S303

No

Yes

Request a cooling fan of the vehicle to run at a maximum rotational speed — S304

No

Determine whether the vehicle meets any preset locked rotor motor exit condition and whether the flow rate in the cooling flow path is less than a second preset cooling flow rate — S307

Yes — S308

Request the cooling fan of the vehicle to stop running

Determine whether the flow rate in the cooling flow path is greater than a third preset cooling flow rate — S305

No

Yes

Request a spill valve of the vehicle to enter a forcibly closed state — S306

No

Determine whether the vehicle meets any preset locked rotor motor exit condition or whether the flow rate in the cooling flow path is less than a starting flow rate — S309

Yes

Request the spill valve of the vehicle to be opened — S310

Determine whether the vehicle meets any preset locked rotor motor exit condition, and determine that the current temperature of the driving motor is less than an auxiliary cooling shutdown temperature of the engine — S311

Yes — S312

Shut down the engine after preset duration

FIG. 3

Device — 400

Controller — 401

FIG. 4

500

505 — Controller

Driving motor — 501

Cooling flow path — 504

502 — Engine → Engine end oil pump — 503

FIG. 5

600

622 — Processor

632 — Memory

626 — Power supply component

Communication component — 650

Input/Output interface — 658

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111022142 A
- US 2013173104 A1
- CN 111907512 A